(19) Europäisches Patentamt
European Patent Office
Office européen des brevets

(11) **EP 2 626 838 A1**

(12) **DEMANDE DE BREVET EUROPEEN**

(43) Date de publication:
**14.08.2013 Bulletin 2013/33**

(51) Int Cl.:
***G06T 15/04*** *(2011.01)*

(21) Numéro de dépôt: **13152973.7**

(22) Date de dépôt: **29.01.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **13.02.2012 FR 1251341**

(71) Demandeur: **Total Immersion**
**92150 Suresnes (FR)**

(72) Inventeur: **Rollet, Renan**
**93170 BAGNOLET (FR)**

(74) Mandataire: **Imbert de Tremiolles, Ghislain Santarelli**
**14, avenue de la Grande Armée**
**B.P. 237**
**75822 Paris Cedex 17 (FR)**

(54) **Procédé, dispositif et système de génération d'une représentation texturée d'un objet réel**

(57) L'invention a notamment pour objet la génération d'une représentation texturée d'un objet réel dans un système comprenant un dispositif de traitement de données relié à un dispositif d'acquisition d'images. Après avoir reçu (310) une première image représentant ledit objet réel selon une pose donnée et après avoir obtenu (320, 325, 330, 335) une seconde image représentant ledit objet réel selon une pose identique à ladite pose donnée, ladite seconde image étant représentative de la transparence dudit objet réel selon ladite pose donnée, ladite représentation texturée est générée (340) par combinaison desdites première et seconde images.

Fig. 3

EP 2 626 838 A1

## Description

La présente invention concerne la modélisation d'objets réels et plus particulièrement un procédé, un dispositif et un système de génération d'une représentation texturée d'un objet réel.

Les représentations tridimensionnelles d'objets réels sont souvent utilisées dans des systèmes informatiques pour de nombreuses applications telles que l'aide à la conception ou la simulation. Ainsi, par exemple, les représentations tridimensionnelles de paires de lunettes peuvent être utilisées par des acheteurs potentiels, dans une application de réalité augmentée, pour les aider à choisir une paire de lunettes particulière selon, notamment, sa forme et sa couleur.

Les représentations tridimensionnelles sont des entités informatiques comprenant typiquement un ensemble de points et/ou de courbes représentant des surfaces auxquelles peuvent être associées des textures ou représentation texturée d'un objet ou d'une partie de celui-ci. Les textures ou représentations texturées sont typiquement des surfaces finies bidimensionnelles.

De telles représentations tridimensionnelles sont généralement générées à partir d'applications logicielles de conception, appelées applications de CAO (sigle de Conception Assistée par Ordinateur).

Elles peuvent également être créées à partir des objets réels, par exemple par numérisation à l'aide d'un scanner qui analyse ces objets pour obtenir des informations topologiques et, le cas échéant, des informations d'apparence telles que les couleurs et les texture. Typiquement, un scanner détermine la position d'un échantillonnage de points, dans un système de coordonnées prédéterminé, des surfaces de l'objet à modéliser pour ensuite extrapoler leur forme.

Des photographies des objets peuvent également être utilisées pour les modéliser par analyse d'images.

Par ailleurs, selon les applications envisagées, l'utilisation de représentations tridimensionnelles peut être remplacée par l'utilisation d'une représentation texturée (représentation bidimensionnelle), plus facile à gérer et nécessitant moins de ressources de calcul. Dans ce cas, la représentation texturée utilisé est choisie selon l'angle de vue de l'objet considéré.

Ainsi, il existe un besoin pour obtenir facilement, rapidement et à moindre coûts, des représentations texturées pouvant être utilisés en tant que telles ou pour construire une représentation tridimensionnelle.

L'invention a ainsi pour objet un procédé de génération d'une représentation texturée d'un objet réel dans un système comprenant un dispositif de traitement de données relié à un dispositif d'acquisition d'images, ce procédé comprenant les étapes suivantes,

- réception d'une première image représentant ledit objet réel selon une pose donnée ;
- obtention d'une seconde image représentant ledit objet réel selon une pose identique à ladite pose donnée, ladite seconde image étant représentative de la transparence dudit objet réel selon ladite pose donnée ; et
- génération de ladite représentation texturée par combinaison desdites première et seconde images.

Le procédé selon l'invention permet ainsi de créer très facilement et rapidement des représentations texturées d'objets réels tout en limitant leurs coûts de création. En outre, ils peuvent être créés par des personnes n'ayant pas de compétences particulières dans la modélisation d'objets ni dans le domaine des objets réels concernés.

Selon un mode de réalisation particulier, ladite combinaison desdites première et seconde images comprend une combinaison point à point desdites première et seconde images, particulièrement simple à mettre en oeuvre et ne nécessitant pas de ressources de traitement particulières.

Toujours selon un mode de réalisation particulier, le procédé comprend en outre une étape de réception d'une troisième image représentant ledit objet réel selon une pose identique à ladite pose donnée, ladite troisième image étant réalisée selon des conditions d'éclairage distinctes des conditions d'éclairage ayant conduit à ladite première image, ladite seconde image étant obtenue par traitement de ladite troisième image.

De façon avantageuse, ledit traitement comprend au moins une des étapes de filtrage, d'inversion et de seuillage d'une composante ou d'une combinaison de composantes de chaque point de ladite troisième image pour améliorer la qualité des représentations texturées créées.

Selon un mode de réalisation particulier, lesdites conditions d'éclairage ayant conduit à ladite première image permettent un éclairage frontal dudit objet réel et lesdites conditions d'éclairage ayant conduit à ladite troisième image permettent un éclairage en contrejour dudit objet réel. Le procédé selon l'invention permet ainsi de limiter les manipulations des objets réels dont des représentations texturées doivent être obtenues, récupérer la transparence de ceux-ci et les détourer au cours d'un même traitement. En outre, le procédé selon l'invention permet la suppression automatique des ombres portées par ces objets réels.

A ces fins, notamment, le procédé peut en outre comprendre une étape de contrôle d'activation sélective de sources de lumière. Il peut également comprendre en outre une étape de commande d'acquisition d'au moins l'une desdites images.

L'invention a également pour objet un programme d'ordinateur comprenant des instructions adaptées à la mise en oeuvre de chacune des étapes du procédé décrit précédemment lorsque ledit programme est exécuté sur un ordinateur ainsi qu'un dispositif comprenant des moyens adaptés à la mise en oeuvre de chacune des étapes du procédé décrit précédemment. Les avantages procurés par ce programme d'ordinateur et ce dispositif sont similaires à ceux évoqués précédemment.

L'invention a aussi pour objet un système de génération d'une représentation texturée d'un objet réel à partir d'images dudit objet réel, ce système comprenant les dispositifs suivants,

- dispositif d'acquisition d'images ; et
- dispositif de traitement de données connecté audit dispositif d'acquisition d'images et configuré pour mettre en oeuvre chacune des étapes suivantes,

   o réception d'une première image représentant ledit objet réel selon une pose donnée ;
   ○ obtention d'une seconde image représentant ledit objet réel selon une pose identique à ladite pose donnée, ladite seconde image étant représentative de la transparence dudit objet réel selon ladite pose donnée ; et
   o génération de ladite représentation texturée par combinaison desdites première et seconde images.

Le système selon l'invention permet ainsi de créer très facilement et rapidement des représentations texturées d'objets réels tout en limitant leurs coûts de création. En outre, ils peuvent être créés par des personnes n'ayant pas de compétences particulières dans la modélisation d'objets ni dans le domaine des objets réels concernés.

De façon avantageuse, le système comprend en outre un support adapté à recevoir ledit objet réel, ledit support étant configuré pour présenter ledit objet réel dans une pose similaire à celle d'utilisation dudit objet réel. Le système peut ainsi être préconfiguré, la pose des objets réels étant liée à celle dudit support, limitant les traitements à effectuer.

Selon un mode de réalisation particulier, le système comprend en outre une pluralité de sources de lumière réparties en au moins deux groupes, au moins une source de lumière d'un premier groupe pouvant être activée indépendamment d'au moins une source de lumière d'un second groupe. Ledit dispositif de traitement de données peut être configuré pour activer séquentiellement au moins une source de lumière dudit premier groupe et au moins une source de lumière dudit second groupe.

Toujours selon un mode de réalisation particulier, le système comprend en outre un cyclorama configuré pour générer des reflets sur ledit objet réel dans ladite première image pour permettre de contrôler les reflets dans les objets réels considérés.

D'autres avantages, buts et caractéristiques de la présente invention ressortent de la description détaillée qui suit, faite à titre d'exemple non limitatif, au regard des dessins annexés dans lesquels :

- la figure 1 illustre un exemple d'un environnement permettant de mettre en oeuvre l'invention pour générer une représentation texturée d'un objet réel ;
- la figure 2, comprenant les figures 2a à 2f, illustre la façon dont est positionné un objet réel dont une représentation texturée doit être générée, ici une paire de lunettes, sur un support utilisé à ces fins et en situation d'utilisation courante, c'est-à-dire ici sur un visage, vue de dessus, de face et de côté ;
- la figure 3 illustre schématiquement certaines étapes mises en oeuvre conformément à l'invention pour générer une représentation texturée d'un objet réel ;
- la figure 4 illustre un exemple de mise en oeuvre d'étapes décrites en référence à la figure 3 pour générer une représentation texturée d'une paire de lunettes ; et
- la figure 5 illustre un exemple de dispositif de traitement de données adapté à mettre en oeuvre l'invention ou une partie de l'invention.

De façon générale, l'invention a pour objet la génération d'une représentation texturée d'un objet réel en combinant plusieurs images de cet objet. Ces images représentent ici ce dernier selon la même pose, avec le même angle de vue et en utilisant la même focale. Selon un mode de réalisation particulier, seules les conditions d'éclairage sont modifiées entre les images utilisées.

Selon ce mode de réalisation particulier, une image obtenue selon des conditions d'éclairage normales peut être combinée à une image obtenue dans des conditions d'éclairage à contrejour, après traitement de cette dernière. Le contrejour est ici réalisé de telle sorte qu'une surface blanche opaque apparaisse noire : seules les zones transparentes de l'objet génèrent des valeurs intermédiaires telles que des niveaux de gris.

A ces fins, l'invention met avantageusement en oeuvre un support physique des objets réels dont des représentations texturées doivent être générées, un ou plusieurs dispositifs d'acquisition d'images tels que des appareils photographiques et des caméras vidéo et un dispositif de traitement de données de type ordinateur personnel ou station de travail.

Le support physique utilisé pour soutenir un objet réel à partir duquel une représentation texturée doit être générée est adapté à soutenir l'objet réel dans des conditions proches des conditions d'utilisation de cet objet. En particulier, le support physique permet de maintenir l'objet dans la position dans laquelle il est utilisé, en masquant les zones potentiellement masquées lors de son utilisation.

Le support est avantageusement réalisé dans un matériau translucide et réfléchissant la lumière de façon uniforme afin de faciliter le traitement d'images.

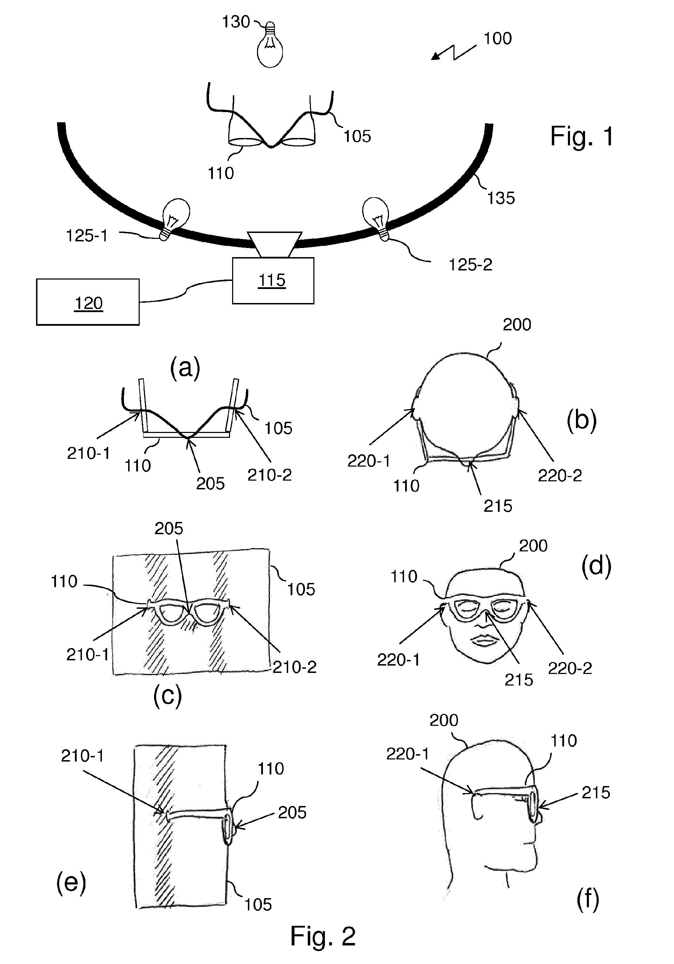

Il consiste typiquement en une surface fermée, par exemple une surface ayant une forme sphérique ou ovoïde, ou ouverte, par exemple une surface générée par le développement d'une courbe telle qu'une courbe plane ayant une forme d'accolade selon une direction particulière, c'est-à-dire en étendant la courbe selon cette direction, et comme illustré sur les figures 1 et 2.

Le support est ici réalisé dans un matériau translucide et comprend une source de lumière située à l'intérieure ou derrière (par rapport au dispositif d'acquisition d'images utilisé).

Alternativement, le support peut être réalisé avec une structure suffisamment discrète pour ne pas perturber la génération de représentations texturées. Il peut s'agir, par exemple, d'un support filaire.

Après qu'un objet dont une représentation texturée doit être générée ait été placé sur le support, plusieurs images de cet objet sont obtenues selon un point de vue unique, à l'aide d'un dispositif d'acquisition d'images, en faisant varier des conditions de prise de vue, typiquement des conditions d'éclairage ou des paramètres d'acquisition d'images, de façon manuelle ou contrôlée par ordinateur. Le dispositif d'acquisition d'images utilisé est ici connecté à un dispositif de traitement de données de type ordinateur personnel, permettant de traiter des images obtenues.

Une représentation texturée générée à partir d'un objet réel conformément à l'invention peut ensuite être utilisé pour modéliser cet objet réel en utilisant, par exemple, la technique connue sous le nom de technique des imposteurs consistant à appliquer une texture sur un modèle tridimensionnel prédéterminé (ou gabarit). Elle peut également être utilisée en tant que telle pour être superposée à une image comme décrit ci-après.

La figure 1 illustre un exemple d'un environnement 100 permettant de mettre en oeuvre l'invention pour générer une représentation texturée d'un objet réel.

L'environnement 100 comprend ici un support 105 configuré pour recevoir un objet réel à partir duquel peut être générée une représentation texturée de celui-ci, selon une position particulière, ici une paire de lunettes 110. Selon l'exemple donné, l'environnement 100 comprend en outre un dispositif d'acquisition d'images 115, par exemple un appareil photographique, relié à un ordinateur 120, par exemple un ordinateur standard de type PC (sigle de *Personal Computer* en terminologie anglo-saxonne).

L'environnement 100 comprend également ici un système d'éclairage constitué de plusieurs groupes de sources de lumière pouvant être activés de façon distincte. Un premier groupe d'éclairage comprend ici les sources de lumière 125-1 et 125-2, par exemple des spots, et un second groupe comprend la source de lumière 130, par exemple une ampoule de forte puissance placée derrière le support 105 par rapport au dispositif d'acquisition d'images 115. Les premier et second groupes sont, selon l'exemple donné, activé de façon alternative, le premier groupe permettant un éclairage frontal tandis que le second groupe permet un éclairage en contrejour. L'activation de ces groupes peut être effectuée manuellement ou de façon automatique, par exemple à l'aide d'une commande issue de l'ordinateur 120.

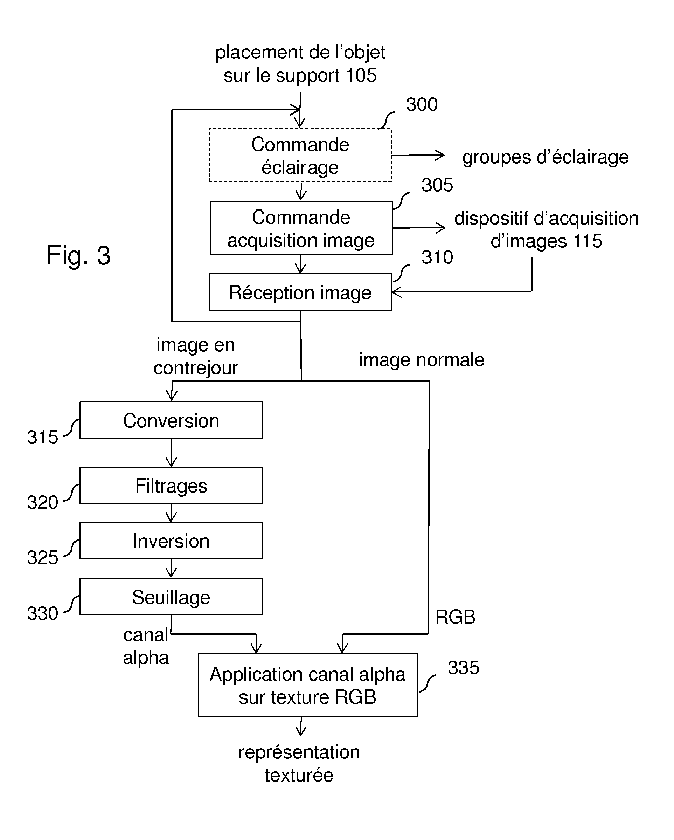

L'ordinateur 120 génère une représentation texturée de la paire de lunettes 110 à partir d'images acquises par le dispositif d'acquisition d'images 115, une première image correspondant à un éclairage de l'objet réel par les sources de lumière 125-1 et 125-2 du premier groupe et une seconde image correspondant à un éclairage de l'objet réel par la source de lumière 130 du second groupe, comme décrit en référence à la figure 3.

A titre d'illustration, l'environnement 100 comprend en outre ici un cyclorama 135 placé face à l'objet réel dont une représentation texturée est générée, c'est-à-dire derrière ou autour du dispositif d'acquisition d'images 115. Le cyclorama 135 comprend une représentation d'un environnement à refléter sur l'objet réel dont une représentation texturée est générée (lors de la prise de vue en conditions d'éclairage normales), afin d'augmenter le réalisme de cette dernière.

Le support 105 est par exemple réalisé dans une matière plastique telle que du PVC (polychlorure de vinyle). Comme illustré schématiquement sur les figures 1 et 2, le support 105 comprend ici deux ouvertures pour recevoir les extrémités des branches de lunettes et une protubérance adaptée à recevoir les deux supports de nez fixés sur la partie de la monture située entre les verres. Les deux ouvertures et la protubérance sont approximativement alignées selon un plan horizontal.

Le dispositif d'acquisition d'images 115 est situé à une position prédéterminée par rapport au support 105 de telle sorte que la pose de la paire de lunettes 110, lorsqu'elle est positionnée sur le support 105, soit constante et puisse être prédéterminée. En d'autres termes, le placement d'une paire de lunettes 110 sur le support 105 est ainsi normalisé du fait que le support possède trois points d'appui de référence correspondant aux trois points d'appui naturel d'une paire de lunettes portée (les oreilles et le nez). Un référentiel unique et normalisé, lié à ces trois points d'appui de référence, est donc avantageusement utilisé pour générer une représentation texturée de paires de lunettes. Ce référentiel est avantageusement lié à un point d'appui de référence, par exemple le point d'appui des deux supports de nez fixés sur la partie de la monture située entre les verres, de telle sorte qu'il puisse être utilisé facilement lors de la génération d'une représentation texturée, pour effectuer un lien entre le support utilisé et une paire de lunettes comme pour le positionnement d'une modélisation d'une paire de lunettes (sous forme de représentation texturée) sur une représentation d'un visage.

Le support 105 est ici tel qu'il permet, sur une prise de vue de coté, de cacher l'arrière de la branche opposée, de cacher la partie des branches cachées par les oreilles lorsque la paire de lunettes est portée et d'écarter les branches de façon à ne plus voir celle-ci dans une vue de face.

Il est observé ici que si, sur la figure 1, le dispositif d'acquisition d'images est placé face à la paire de lunettes, l'ensemble constitué du support 105, de la paire de lunettes 110 et, éventuellement, la source de lumière 130 peut être tourné de telle sorte qu'un côté de la paire de lunettes 110 se trouve en face du dispositif d'acquisition d'images 115. Il est également possible de déplacer le dispositif d'acquisition d'images 115 et, éventuellement, les sources de lumière 125-1 et 125-2 et/ou l'écran 135. Il est ainsi possible de générer des représentations texturées d'une paire de lunettes selon de nombreux angles de vue, permettant ainsi la sélection et la superposition d'une représentation texturée adaptée sur une photographie d'un visage, en fonction de la position du visage.

La figure 2, comprenant les figures 2a à 2f, illustre la façon dont est positionné un objet réel dont une représentation texturée est générée, ici une paire de lunettes, sur un support utilisé à ces fins et en situation d'utilisation courante, c'est-à-dire ici sur un visage, vues de dessus, de face et de côté.

Les figures 2a et 2b représentent, vue de dessus, la façon dont est positionné une paire de lunettes 110 sur un support 105 et sur un visage 200, respectivement. Comme représenté, la paire de lunettes 110 repose sur trois points d'appui du support 105, un point d'appui 205 lié à une protubérance du support 105, ayant un rôle similaire à celui d'un nez pour le maintien de la paire de lunettes 110 sur un point d'appui référencé 215, et deux points d'appui 210-1 et 210-2, liés à des ouvertures formées dans le support 105, dans lesquelles sont insérées les extrémités des branches de la paire de lunettes 110 ayant un rôle similaire à celui des oreilles pour le maintien de la paire de lunettes 110 sur des points d'appui référencés 220-1 et 220-2. L'utilisation d'ouvertures dans le support 105 et non de simples protubérances permet de masquer l'extrémité des branches (comme le font des oreilles). Naturellement, des protubérances ayant une forme particulière, telle que celle d'oreilles, peuvent être utilisées pour servir de point d'appui des branches et masquer leur extrémité.

De même, les figures 2c et 2d représentent, vu de face, la façon dont est positionné la paire de lunettes 110 sur le support 105 et sur le visage 200, respectivement. A nouveau, comme représenté, la paire de lunettes 110 repose sur les trois points d'appui 205, 210-1 et 210-2 du support 105, ayant un rôle similaire aux points d'appui 215, 220-1 et 220-2 du visage 200, liés au nez et aux oreilles du porteur de la paire de lunettes 110.

De façon similaire encore, les figures 2e et 2f représentent, vu de côté, la façon dont est positionné la paire de lunettes 110 sur le support 105 et sur le visage 200, respectivement. A nouveau, comme représenté, la paire de lunettes 110 repose sur les trois points d'appui 205, 210-1 et 210-2 du support 105 (le point d'appui 210-2 étant ici masqué par le support 105), ayant un rôle similaire aux points d'appui 215, 220-1 et 220-2 du visage 200 (le point d'appui 220-2 étant ici masqué par le visage 200), liés au nez et aux oreilles du porteur de la paire de lunettes 110.

Selon le mode de réalisation illustré sur la figure 1, deux groupes d'éclairage sont disposés de part et d'autres du support 105, l'un permettant un éclairage frontal et l'autre un éclairage en contrejour. Une image de l'objet réel est acquise par le dispositif d'acquisition d'images 115 pour chacun de ces éclairages.

Comme décrit précédemment, le dispositif d'acquisition d'images utilisé est connecté à un ordinateur, par exemple à l'aide d'une connexion de type USB (sigle d'*Universal Serial Bus* en terminologie anglo-saxonne).

Selon un mode de réalisation particulier, cette connexion est bidirectionnelle. Elle permet alors de contrôler le dispositif d'acquisition d'images, notamment le déclenchement des prises de vue et, le cas échéant, effectuer des réglages tels que le contrôle du temps de pose et de la sensibilité ISO de la photographie. Elle permet également le transfert des images acquises vers une mémoire de masse, par exemple un disque dur, de l'ordinateur auquel est connecté le dispositif d'acquisition d'images.

La figure 3 illustre schématiquement certaines étapes mises en oeuvre conformément à l'invention pour générer une représentation texturée d'un objet réel.

Le procédé décrit ici la génération d'une représentation texturée d'un objet réel à partir de deux images de celui-ci obtenues sans modifier la position de l'objet ni celle du dispositif d'acquisition d'images (ou son optique) mais en modifiant les conditions d'éclairage. La combinaison de ces images permet de générer automatiquement une représentation texturée de l'objet.

Après que l'objet réel dont une représentation texturée doit être générée, ici une paire de lunettes, ait été positionné sur le support 105 prévu à cet effet, dans une position prédéterminée, une commande peut être émise par l'ordinateur 120, s'il est relié aux groupes d'éclairage, pour activer des sources de lumière (étape 300). Si l'ordinateur 120 n'est pas relié aux groupes d'éclairage (ou selon la configuration du système), l'activation des sources de lumière est contrôler par un utilisateur ou par un autre système.

Une commande est alors émise par l'ordinateur 120 au dispositif d'acquisition d'images 115 pour l'acquisition d'une image (étape 305). Cette commande peut comprendre une simple instruction d'acquisition d'une image ou une commande plus complexe visant à configurer le dispositif d'acquisition d'images selon des paramètres particuliers. Alternativement, la commande vise l'enregistrement d'une ou de plusieurs images reçues par l'ordinateur sous forme de flux.

Cette commande peut être générée de façon manuelle, par un utilisateur, ou de façon automatique par exemple par la détection de la présence de l'objet réel sur le support prévu à cet effet (une telle détection peut être réalisée par analyse d'image ou à l'aide de contacts) et de conditions d'éclairage particulières.

La ou les images acquises sont reçues par l'ordinateur dans une étape référencée 310.

Comme illustré, les étapes 305 et 310 ainsi que, le cas échéant, l'étape 300 sont répétées pour les différentes conditions d'éclairage, ici pour des conditions d'éclairage frontal et des conditions d'éclairage à contrejour.

Aucune opération particulière n'est ici directement effectuée sur l'image correspondante aux conditions normales d'éclairage. Cette image est considérée comme une texture de type RGB (sigle de *Red, Green and Blue* en terminologie anglo-saxonne), c'est-à-dire une image en couleur comprenant plusieurs composantes (chaque point de coordonnées $(i, j)$ est défini par trois composantes $R_{i,j}$, $G_{i,j}$ et $B_{i,j}$). Il pourrait également s'agir d'une image en niveau de gris ou d'une image codée sous un autre format.

L'image obtenue dans des conditions d'éclairage à contrejour est ici convertie en image en niveau de gris (s'il s'agit d'une image en couleur) pour faciliter son traitement (étape 315). Une telle conversion est typiquement réalisée selon la formule suivante,

$$NG_{i,j} = \alpha R_{i,j} + \beta G_{i,j} + \gamma B_{i,j}$$

où $\alpha + \beta + \gamma = 1$, $R_{i,j}$, $G_{i,j}$ et $B_{i,j}$ sont les composantes rouge, verte et bleue d'un point ayant de coordonnées $(i, j)$ et $NG_{i,j}$ représente le niveau de gris de ce point. Typiquement, $\alpha = 0,2125$, $\beta = 0,7154$ et $\gamma = 0,0721$ et les valeurs de $R_{i,j}$, $G_{i,j}$, $B_{i,j}$ et $NG_{i,j}$ varient entre $V_{min}=0$ et $V_{max}=255$.

Une étape de filtrage est ici ensuite effectuée (étape 320) pour isoler les zones opaques claires et foncées. A ces fins, deux seuils $\theta_1$ et $\theta_2$ peuvent être utilisés conformément à la relation suivante,

$$\text{si } V_{min} \leq NG_{i,j} \leq \theta_1, NG_{i,j} = V_{min}$$

et

$$\text{si } \theta_2 \leq NG_{i,j} \leq V_{max}, NG_{i,j} = V_{max}$$

A titre d'illustration, les valeurs de ces seuils peuvent être les valeurs $\theta_1 = 10$ et $\theta_2 = 245$

Une inversion est ensuite ici réalisée sur l'image (étape 325) selon la relation suivante,

$$NG'_{i,j} = V_{max} - NG_{i,j}$$

où $NG'_{i,j}$ représente l'inverse de $NG_{i,j}$.

et un seuillage est de préférence effectué (étape 330), par exemple selon la relation suivante,

$$CA_{i,j} = V_{min} + V_{max} \left( \frac{NG'_{i,j} - V_{min}}{V_{max} - V_{min}} \right)$$

où $CA_{i,j}$ représente la valeur de transparence du point de coordonnées $(i, j)$ aussi appelée valeur du canal alpha.

Un tel seuillage peut naturellement être défini par un utilisateur à l'aide, par exemple, d'une fonction ou de plusieurs fonctions prédéterminées et/ou de paramètres. De telles fonctions peuvent notamment être créées par l'utilisation de courbes de Bézier.

Dans une étape suivante (étape 335), la composante du canal alpha ($CA_{i,j}$) est combinée avec les composantes RGB ($R_{i,j}$, $G_{i,j}$ et $B_{i,j}$) de chaque point de l'image obtenue dans des conditions d'éclairage normal pour générer une représentation texturée de l'objet réel placé sur le support. Chaque point de la représentation texturée est ainsi caractérisé par une composante de transparence et des composantes de couleur (ou une composante de niveau de gris).

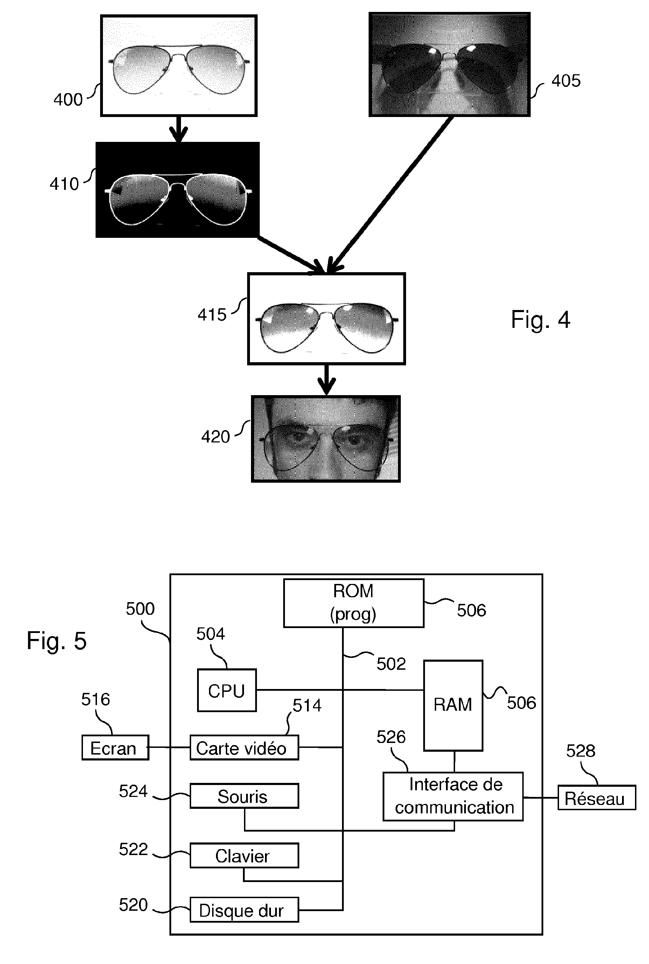

La figure 4 illustre un exemple de mise en oeuvre d'étapes décrites en référence à la figure 3 pour générer une représentation texturée d'une paire de lunettes.

Plus précisément, la figure 4 illustre une image 400 représentant une paire de lunettes éclairée à contrejour, par exemple à l'aide d'une ampoule de forte puissance disposée derrière le support translucide sur lequel est disposé la paire de lunettes, et une image 405 représentant cette même paire de lunettes, disposée sur le même support avec la même pose, dans des conditions normales d'éclairage. Les images 400 et 405 ont été obtenues avec le même dispositif d'acquisition d'images dont la position par rapport au support de la paire de lunettes n'a pas changé.

L'image 410 représente l'image 400 après traitement, c'est-à-dire les valeurs de transparence obtenues. L'image 410 est alors combinée avec l'image 405 pour créer la représentation texturée illustrée sur l'image 415. Comme décrit précédemment, cette représentation texturée comprend des informations de texture de type RGB et des informations de transparence (canal alpha).

Cette représentation texturée peut être superposée à une image pour simuler, par exemple, un port de lunettes comme illustré sur l'image 420. Cette dernière résulte de la superposition de la représentation texturée illustrée sur l'image 415 à une image représentant un visage.

Il est observé ici que la calibration d'une représentation texturée obtenue conformément à l'invention peut être réalisée à partir d'informations de prises de vue, notamment la position de l'objet réel dont une représentation texturée doit être générée sur le support utilisé, la position du support utilisé par rapport au dispositif d'acquisition d'images utilisé et les paramètres du dispositif d'acquisition d'images tels que la focale.

Comme décrit précédemment, la représentation texturée peut être utilisée pour modéliser l'objet réel considéré en utilisant, par exemple, un gabarit prédéterminé et une technique telle que la technique des imposteurs consistant à appliquer une texture sur un modèle tridimensionnel prédéterminé.

Le procédé décrit précédemment peut ainsi être utilisé pour obtenir des représentations texturées de lunettes de soleil par l'obtention des niveaux de transparence des verres, des variations et des dégradés ainsi que, le cas échéant, les gravures réalisées dans les verres. Il peut également être utilisé pour traiter des vêtements, étant observé qu'il peut être mis en oeuvre pour tous types de vêtements, sans contrainte de couleurs (ce procédé de détourage est ainsi plus fiable qu'un procédé de type *chromakey* dont la couleur de référence ne peut être utilisée pour les objets réels). Il peut aussi être utilisé pour traiter des bijoux, ce procédé de détourage évitant la projection d'un fond de couleur dans les matériaux réfléchissant (l'utilisation d'un algorithme de type *chromakey* appliqué sur un bijou tel qu'une bague crée de nombreux reflets verts dans le matériau).

La représentation texturée obtenue peut notamment être utilisée à titre d'illustration, par exemple une photographie sur un fond uni de n'importe quelle couleur, pour un essayage statique sur photographie (ainsi une unique prise de vue d'une paire de lunettes détourée peut être utilisée pour essayer la paire de lunettes sur une photographie d'identité), pour un essayage dynamique sur une série de photographies (à ces fins, une série de vues de l'objets est effectuée (vues à 360°) afin d'afficher à chaque instant la vue correspondante à l'orientation de l'utilisateur) ou pour générer une modélisation comme décrit précédemment.

En outre, l'utilisation d'un cyclorama permet de maitriser les reflets dans l'objet réel dont une représentation texturée est générée, permettant ainsi de voir un environnement particulier se refléter sur des objets réels très réfléchissant tels que des bijoux ou des paires de lunettes.

La figure 5 illustre un exemple de dispositif de traitement de données pouvant être utilisé pour mettre en oeuvre, au moins partiellement, l'invention, notamment les étapes décrites en référence à la figure 3. Le dispositif 500 est par exemple un ordinateur de type PC.

Le dispositif 500 comporte de préférence un bus de communication 502 auquel sont reliés :

- une unité centrale de traitement ou microprocesseur 504 (CPU, *Central Processing Unit)* ;
- une mémoire morte 506 (ROM, *Read Only Memory*) pouvant comporter le système d'exploitation et des programmes tels que "Prog" ; et
- une mémoire vive ou mémoire cache 508 (RAM, *Random Access Memory*) comportant des registres adaptés à enregistrer des variables et paramètres créés et modifiés au cours de l'exécution des programmes précités.

Optionnellement, le dispositif 500 peut également disposer des éléments suivants :

- une interface de communication 526 reliée à un réseau de communication 528, par exemple le réseau Internet, l'interface étant apte à transmettre et à recevoir des données ;
- une carte graphique 514 reliée à un écran 516 ;

- un disque dur 520 pouvant comporter les programmes "Prog" précités et des données traitées ou à traiter selon l'invention ;
- un clavier 522 et une souris 524 ou tout autre dispositif de pointage comme un crayon optique, un écran tactile ou une télécommande permettant à l'utilisateur d'interagir avec les programmes selon l'invention ; et
- un lecteur de cartes mémoires (non représenté) adapté à y lire ou à y écrire des données traitées ou à traiter selon l'invention.

Le bus de communication permet la communication et l'interopérabilité entre les différents éléments inclus dans le dispositif 500 ou reliés à lui. La représentation du bus n'est pas limitative et, notamment, l'unité centrale est susceptible de communiquer des instructions à tout élément du dispositif 500 directement ou par l'intermédiaire d'un autre élément du dispositif 500.

Le code exécutable de chaque programme permettant à l'appareil programmable de mettre en oeuvre les processus selon l'invention, peut être stocké, par exemple, dans le disque dur 520 ou en mémoire morte 506.

Selon une variante, le code exécutable des programmes pourra être reçu par l'intermédiaire du réseau de communication 528, via l'interface 526, pour être stocké de façon identique à celle décrite précédemment.

De manière plus générale, le ou les programmes pourront être chargés dans un des moyens de stockage du dispositif 500 avant d'être exécutés.

L'unité centrale 504 va commander et diriger l'exécution des instructions ou portions de code logiciel du ou des programmes selon l'invention, instructions qui sont stockées dans le disque dur 520 ou dans la mémoire morte 506 ou bien dans les autres éléments de stockage précités. Lors de la mise sous tension, le ou les programmes qui sont stockés dans une mémoire non volatile, par exemple le disque dur 520 ou la mémoire morte 506, sont transférés dans la mémoire vive 508 qui contient alors le code exécutable du ou des programmes selon l'invention, ainsi que des registres pour mémoriser les variables et paramètres nécessaires à la mise en oeuvre de l'invention.

Il convient de noter que l'appareil de communication comportant le dispositif selon l'invention peut également être un appareil programmé. Cet appareil contient alors le code du ou des programmes informatiques par exemple figé dans un circuit intégré à application spécifique (ASIC).

Naturellement, pour satisfaire des besoins spécifiques, une personne compétente dans le domaine de l'invention pourra appliquer des modifications dans la description précédente. En particulier, si l'invention a été particulièrement décrite dans le contexte de la modélisation de paires de lunettes, elle peut être mise en oeuvre pour d'autres objets réels.

## Revendications

1. Procédé de génération d'une représentation texturée d'un objet réel (110) dans un système comprenant un dispositif de traitement de données (120) relié à un dispositif d'acquisition d'images (115), ce procédé étant **caractérisé en ce qu'**il comprend les étapes suivantes,

   - réception (310) d'une première image représentant ledit objet réel selon une pose donnée ;
   - obtention (315, 320, 325, 330) d'une seconde image représentant ledit objet réel selon une pose identique à ladite pose donnée, ladite seconde image étant représentative de la transparence dudit objet réel selon ladite pose donnée ; et
   - génération (335) de ladite représentation texturée par combinaison desdites première et seconde images.

2. Procédé selon la revendication 1 selon lequel ladite combinaison desdites première et seconde images comprend une combinaison point à point desdites première et seconde images.

3. Procédé selon la revendication 1 ou la revendication 2 comprenant en outre une étape de réception d'une troisième image représentant ledit objet réel selon une pose identique à ladite pose donnée, ladite troisième image étant réalisée selon des conditions d'éclairage distinctes des conditions d'éclairage ayant conduit à ladite première image, ladite seconde image étant obtenue par traitement de ladite troisième image.

4. Procédé selon la revendication 3 selon lequel ledit traitement comprend au moins une des étapes de filtrage (320), d'inversion (325) et de seuillage (330) d'une composante ou d'une combinaison de composantes de chaque point de ladite troisième image.

5. Procédé selon la revendication 3 ou la revendication 4 selon lequel lesdites conditions d'éclairage ayant conduit à ladite première image permettent un éclairage frontal dudit objet réel et lesdites conditions d'éclairage ayant conduit à ladite troisième image permettent un éclairage en contrejour dudit objet réel.

**6.** Procédé selon l'une quelconque des revendications précédentes comprenant en outre une étape de contrôle d'activation sélective de sources de lumière.

**7.** Procédé selon l'une quelconque des revendications précédentes comprenant en outre une étape de commande d'acquisition d'au moins l'une desdites images.

**8.** Programme d'ordinateur comprenant des instructions adaptées à la mise en oeuvre de chacune des étapes du procédé selon l'une quelconque des revendications précédentes lorsque ledit programme est exécuté sur un ordinateur.

**9.** Dispositif comprenant des moyens adaptés à la mise en oeuvre de chacune des étapes du procédé selon l'une quelconque des revendications 1 à 7.

**10.** Système de génération d'une représentation texturée d'un objet réel (110) à partir d'images dudit objet réel, ce système étant **caractérisé en ce qu'**il comprend les dispositifs suivants,

- dispositif d'acquisition d'images (115) ; et
- dispositif de traitement de données (120) connecté audit dispositif d'acquisition d'images et configuré pour mettre en oeuvre chacune des étapes suivantes,

○ réception (310) d'une première image représentant ledit objet réel selon une pose donnée ;
○ obtention (315, 320, 325, 330) d'une seconde image représentant ledit objet réel selon une pose identique à ladite pose donnée, ladite seconde image étant représentative de la transparence dudit objet réel selon ladite pose donnée ; et
○ génération (340) de ladite représentation texturée par combinaison desdites première et seconde images.

**11.** Système selon la revendication 10 comprenant en outre un support adapté à recevoir ledit objet réel, ledit support étant configuré pour présenter ledit objet réel dans une pose similaire à celle d'utilisation dudit objet réel.

**12.** Système selon la revendication 10 ou la revendication 11 comprenant en outre une pluralité de sources de lumière réparties en au moins deux groupes, au moins une source de lumière d'un premier groupe pouvant être activée indépendamment d'au moins une source de lumière d'un second groupe.

**13.** Système selon la revendication 12 selon lequel ledit dispositif de traitement de données est configuré pour activer séquentiellement au moins une source de lumière dudit premier groupe et au moins une source de lumière dudit second groupe.

**14.** Système selon l'une quelconque des revendications 10 à 13 comprenant en outre un cyclorama (135) configuré pour générer des reflets sur ledit objet réel dans ladite première image.

Fig. 1

Fig. 2

placement de l'objet
sur le support 105

| 300 |
| --- |
| Commande éclairage | → groupes d'éclairage |

| 305 |
| --- |
| Commande acquisition image | → dispositif d'acquisition d'images 115 |

| 310 |
| --- |
| Réception image |

Fig. 3

image en contrejour

image normale

| 315 | Conversion |
| --- | --- |

| 320 | Filtrages |
| --- | --- |

| 325 | Inversion |
| --- | --- |

| 330 | Seuillage |
| --- | --- |

RGB

canal alpha

| Application canal alpha sur texture RGB | 335 |
| --- | --- |

représentation texturée

400

405

410

415

Fig. 4

420

Fig. 5

500

504

516

CPU

514

ROM
(prog)

506

502

RAM

506

526

Ecran

Carte vidéo

524

Souris

Interface de
communication

528

Réseau

522

Clavier

520

Disque dur

**EP 2 626 838 A1**

Europäisches
Patentamt

European
Patent Office

Office européen
des brevets

**RAPPORT DE RECHERCHE EUROPEENNE**

Numéro de la demande

EP 13 15 2973

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 955 409 A1 (FITTINGBOX [FR]) 22 juillet 2011 (2011-07-22) | 1-4,6-14 | INV. G06T15/04 |
| A | * abrégé * * pages 2-8 * | 5 | |
| | ----- | | |
| X | SMITH A R ET AL: "BLUE SCREEN MATTING", COMPUTER GRAPHICS PROCEEDINGS 1996 (SIGGRAPH). NEW ORLEANS, AUG. 4 - 9, 1996; [COMPUTER GRAPHICS PROCEEDINGS (SIGGRAPH)], NEW YORK, NY : ACM, US, 4 août 1996 (1996-08-04), pages 259-268, XP000682740, * abrégé * * sections "the problem" et "solution 3" * | 1,2,8-10 | |
| | ----- | | |
| A | ZONGKER D E ET AL: "ENVIRONMENT MATTING AND COMPOSITING", COMPUTER GRAPHICS PROCEEDINGS. SIGGRAPH 99; [COMPUTER GRAPHICS PROCEEDINGS. SIGGRAPH], ACM - NEW YORK, NY, USA, 8 août 1999 (1999-08-08), pages 205-214, XP001032895, DOI: 10.1145/311535.311558 ISBN: 978-0-201-48560-8 sections 2-4; * abrégé * | 1-14 | DOMAINES TECHNIQUES RECHERCHES (IPC) G06T |
| | ----- | | |

Le présent rapport a été établi pour toutes les revendications

| Lieu de la recherche | Date d'achèvement de la recherche | Examinateur |
|---|---|---|
| Berlin | 1 mars 2013 | Gao, Miao |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

                                             
& : membre de la même famille, document correspondant

**EP 2 626 838 A1**

**ANNEXE AU RAPPORT DE RECHERCHE EUROPEENNE
RELATIF A LA DEMANDE DE BREVET EUROPEEN NO.**

EP 13 15 2973

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-03-2013

| Document brevet cité au rapport de recherche | Date de publication | Membre(s) de la famille de brevet(s) | Date de publication |
|---|---|---|---|
| FR 2955409 A1 | 22-07-2011 | EP 2526510 A1<br>FR 2955409 A1<br>US 2012313955 A1<br>WO 2011086199 A1 | 28-11-2012<br>22-07-2011<br>13-12-2012<br>21-07-2011 |

EPO FORM P0460

Pour tout renseignement concernant cette annexe : voir Journal Officiel de l'Office européen des brevets, No.12/82